Europäisches Patentamt

European Patent Office

Office européen des brevets

(11) Veröffentlichungsnummer: **0 182 328**
**B1**

(12) **EUROPÄISCHE PATENTSCHRIFT**

(45) Veröffentlichungstag der Patentschrift:
11.10.89

(21) Anmeldenummer: 85114603.5

(22) Anmeldetag: 16.11.85

(51) Int. Cl.⁴: **B 23 K 11/06**, B 23 K 11/30,
H 01 R 39/64

(54) Vorrichtung zum elektrischen Widerstands-Rollennahtschweissen.

(30) Priorität: 23.11.84 CH 5601/84

(43) Veröffentlichungstag der Anmeldung:
28.05.86 Patentblatt 86/22

(45) Bekanntmachung des Hinweises auf die Patenterteilung: 11.10.89 Patentblatt 89/41

(84) Benannte Vertragsstaaten:
AT BE CH DE FR GB IT LI LU NL SE

(56) Entgegenhaltungen:
CH—A— 596 933
DE—A— 2 244 296
DE—A— 2 805 345
US—A— 2 555 997
US—A— 4 188 523

(73) Patentinhaber: ELPATRONIC AG
Baarerstrasse 117
CH-6300 Zug (CH)

(72) Erfinder: Portmann, Niklaus
Rotenstein 7
CH-5454 Bellikon (CH)
Erfinder: D'Aniello, Alfonso
In der Fadmatt 39
CH-8902 Urdorf (CH)

(74) Vertreter: Hotz, Klaus, Dipl.-El.-Ing. / ETH
c/o SOUDRONIC AG Industriestrasse 35 Postfach 11
CH-8962 Bergdietikon (CH)

## Beschreibung

Die Erfindung betrifft eine Vorrichtung der im Oberbegriff des Patentanspruchs 1 angegebenen Art.

Weiter betrifft die Erfindung eine insbesondere dafür vorgesehene Elektrodenrolle und eine Schweißstromzuführung.

Bei einer bekannten Vorrichtung der vorgenannten Art (L. Pfeifer, Fachkunde des Widerstandsschweißens, Verlag W. Girardet, Essen, 1969, S. 63-65) ist die Elektrodenrolle an einer quer zum Schweißarm angeordneten Flanschwelle befestigt. Die Stromübertragung auf die sich drehende Elektrodenrolle erfolgt über Kontaktbackenpaare, deren gekrümmte Kontaktflächen mit der mit der Elektrodenrolle umlaufenden Mantelfläche der Welle in Berührung sind. Jedes Kontaktbackenpaar wird mittels einer Schraube und zugeordneten Federelementen an einem Ende an die Welle und am anderen Ende über Ruhekontaktstücke an Stromzuführungsflächen angepreßt. Diese gesamte Anordnung ist in einem geschlossenen Gehäuse untergebracht, das ein Ölbad enthält, in welches die Flanschwelle mit den ihr zugeordneten Kontaktbackenenden eingetaucht ist. An einem Deckel dieses Gehäuses sind die Stromzuführungsflächen vorgesehen, an die die Ruhekontaktstücke anpreßbar sind. Der Gehäusedeckel wirkt als elektrischer Leiter und empfängt direkt über ein an ihn angeschlossenes Kabel den Schweißstrom. Die Flanschwelle enthält einen zentralen Kanal, über den den Kühlkanälen in der Elektrodenrolle Kühlwasser zugeführt wird. Außerdem sind in dem Gehäuse innerhalb des Ölbades Kühlleitungen zur Schmierölkühlung verlegt. Ein solcher Rollenkopf kann wegen der außermittig, das heißt an einem Ende der Flanschwelle angeordneten Elektrodenrolle und wegen am entgegengesetzten Wellenende vorgesehener Kühlwasseranschlüsse für die Elektrodenrolle nicht in gerundete Zargen eingeführt werden, aus denen durch Verschweißen der Zargenränder enge Dosenkörper mit einem Innendurchmesser von beispielsweise 52 mm hergestellt werden sollen. Dazu müßte die Elektrodenrolle mittig angeordnet sein und es dürften nicht am zu ihr entgegengesetzten Ende der Flanschwelle die Kühlwasseranschlüsse für die Elektrodenrolle vorgesehen sein. Außerdem würde das wegen des Ölbades groß zu bemessende Gehäuse diesen Verwendungszweck unmöglich machen. Ferner würden die beschriebene Schmiereinrichtung und die beschriebene Kühleinrichtung nicht gestatten, das Gehäuse und die Lage der Schweißrolle dem genannten Verwendungszweck anzupassen und gleichzeitig eine gute Schmierung aller relativdrehbeweglichen Kontaktflächen, eine wirksame Kühlung der Elektrodenrolle und eine verlustarme Schweißstromzuführung zu der Elektrodenrolle aufrechtzuerhalten.

Es ist weiter bereits eine Vorrichtung zum elektrischen Widerstands-Rollennahtschweißen bekannt (DE-OS 27 47 222), bei der die Elektrodenrolle mittig angeordnet ist, so daß sich diese Vorrichtung so ausbilden lassen könnte, daß sie zum Schweißen innerhalb von engen Dosenkörpern der genannten Art benutzt werden könnte. Bei dieser bekannten Vorrichtung wird der Elektrodenrolle der Schweißstrom aber nicht über Gleitkontakte zugeführt. Vielmehr wird eine bekannte Elektrodenrollenbauart verwendet (z. B. gemäß CH-PS 636 548 oder US-PS 4 188 523), bei der die Elektrodenrolle aus einem Stator besteht, dessen Achse in dem Schweißarm festgeklemmt ist, und aus einem auf dem Stator drehbar gelagerten Rotor. Zwischen dem Stator und dem Rotor ist ein Ringspalt vorgesehen, in welchem sich ein flüssiges Metall befindet, beispielsweise Quecksilber oder eine Galliumlegierung, das zur Stromübertragung von dem Stator auf den Rotor dient. Solche Elektrodenrollen sind in der Herstellung aufwendig, erfordern eine sorgfältige Abdichtung und eine ständige Kontrolle dieser Abdichtung (beispielsweise mittels entsprechender Sensoren), damit ihre Stromübertragungs- und Kühleigenschaften gewährleistet bleiben. Bei solchen Elektrodenrollen reichen die Kühlkanäle nur bis in die Nähe des Umfangs des Stators, so daß die Kühlung des Rotors über das flüssige Metall erfolgen muß. Das ist nicht sehr wirksam, weil die üblicherweise verwendeten Metalle kein besonders guter Wärmeleiter sind. Darüber hinaus sind sie auch im Vergleich zu Kupfer kein guter elektrischer Stromleiter, so daß die Schweißstromzuführung zu dem Rotor der Elektrodenrolle verlustbehaftet ist. Bei der Verwendung einer Galliumlegierung als flüssiges Metall können sich Probleme dadurch einstellen, daß diese Metalllegierung sich bereits bei nicht sehr weit unter der Raumtemperatur liegenden Temperaturen verfestigen und dadurch die Elektrodenrolle blockieren kann. Es müssen deshalb besondere Vorkehrungen getroffen werden, um die Elektrodenrolle durch Aufheizen über der Verfestigungstemperatur der Metalllegierung zu halten.

Schließlich ist ein Hochstromübertrager für eine Rollennaht-Schweißmaschine zum Übertragen des Schweißstroms von einem Stromschuh auf eine Schlepprollenwelle bekannt. Der Stromschuh besteht aus einer Kontaktlamellen tragenden, die Schlepprollenwelle umgreifenden Buchse, wobei die Lamellen unter der Last einer Wendelfeder stehen und jeweils Silbergraphitkontakte tragen, die gegen den Umfang der in der Buchse umlaufenden Schlepprollenwelle lasten. Die Schlepprolle ist an einem Ende der Schlepprollenwelle befestigt, und die Kühlung der Schlepprolle und des Hochstromübertragers erfolgt durch die mit einem Kühlkanal versehene Schlepprollenwelle, in die ein Kühlelement einführbar ist. Dieser bekannte Hochstromübertrager hat daher hinsichtlich seines Platzbedarfes und der Elektrodenrollenanordnung die gleichen Nachteile wie die eingangs zuerst beschriebene bekannte Vorrichtung.

Aufgabe der Erfindung ist es, eine Vorrichtung der eingangs genannten Art so auszubilden, daß enge Dosenkörper, z. B. mit 52 mm Innendurchmesser oder weniger, aus gerundeten Zargen durch Verschweißen der Zargenränder hergestellt werden können, und zwar unter Beibehaltung einer guten Schmierung aller relativdrehbeweglichen Kontaktflächen, einer wirksamen Kühlung der Elektrodenrolle und einer verlustarmen Schweißstromzuführung zu der Elektrodenrolle und unter Vermeidung von flüssigem Metall zur Stromübertragung innerhalb der Elektrodenrolle.

Diese Aufgabe ist durch die im Kennzeichen des Patentanspruchs 1 angegebenen Merkmale gelöst.

Bei der Vorrichtung nach der Erfindung ist die Elektrodenrolle beiderseits des schmalen scheibenförmigen Mittelteils mit zwei breiten zylindrischen Naben versehen, an denen die gekrümmten Kontaktflächen der Kontaktbacken anliegen, so daß dem Rotor der Elektrodenrolle der Schweißstrom direkt und somit verlustarm zugeführt werden kann. Die Schweißstromzuführung zu den Kontaktbacken erfolgt ebenfalls verlustarm über den Schweißarm, die auf die Elektrodenrollenachsen aufgesteckten Kappen und den Steg des Klemmstücks, welcher die Stromzuführungsflächen trägt, an denen die Kontaktstücke der Kontaktbacken großflächig anliegen. Die Kontaktbacken umgreifen mit ihren gabelförmigen Enden die Elektrodenrolle beidseitig unten und oben, was eine große Stromübertragungsfläche ergibt und deshalb einen kleinen spezifischen Kontaktdruck ermöglicht. Durch ein optimales Verhältnis zwischen dem Durchmesser der Elektrodenrollennaben und der Bogenlänge der gekrümmten Kontaktflächen der Kontaktbacken ergibt sich ein geringer Reibungswiderstand. Aufgrund der bis in die Nähe der äußeren Mantelfläche des Mittelteils der Elektrodenrolle reichenden Kühlkanäle ist eine besonders wirksame Kühlung der Elektrodenrolle möglich, wobei die Versorgung dieser Kühlkanäle auf platzsparende Weise über Kühlkanäle in dem Schweißarm und in der Elektrodenrollenachse erfolgt. Die Nabenmantelflächen der Elektrodenrolle werden über Filz-Schmiersegmente dauergeschmiert. Dadurch wird nicht nur ein mechanischer Verschleiß zwischen den relativdrehbeweglichen Kontaktflächen auf ein Minimum beschränkt, sondern auch ein aufwendiges Gehäuse mit darin angeordnetem Schmieröl und dieses durchziehenden Kühlleitungen vermieden.

Die Verwendung von in den Kontaktbacken drehbar gelagerten Kontaktstücken ist zwar an sich bekannt (DE-AS 22 44 296), im bekannten Fall dienen die walzenförmig ausgebildeten Kontaktstücke aber zur Stromübertragung auf Kontaktbacken, die über Silberkontaktschalen an einer Welle anliegen und durch zwischen ihnen und dem Gehäuse angeordnete Gummifedern gegen die zugeordneten Kontaktflächen gepreßt werden. Das Gehäuse enthält ebenfalls ein Ölbad, in welchem die Welle untergetaucht ist. Diese bekannte Schweißstromzuführung zu einer Welle einer elektrischen Widerstandsschweißmaschine hat daher bezüglich des oben erwähnten Verwendungszwecks die gleichen Nachteile wie die eingangs zuerst beschriebene bekannte Vorrichtung.

Die Vorrichtung nach der Erfindung läßt sich umfangsmässig mit sehr geringer Baugröße herstellen, so daß sie zum Herstellen von engen Dosenkörpern mit beispielsweise 52 mm Innendurchmesser aus gerundeten Zargen durch Verschweißen der Zargenränder bestens geeignet ist.

In der Ausgestaltung der Erfindung nach Anspruch 2 ergibt sich eine optimale Kühlung der Elektrodenrolle, da das Kühlwasser auf einer Seite über die Kappen und die eine Hälfte der Elektrodenrollenachse zugeführt, etwa radial nach außen bis in unmittelbare Nähe des äußeren Umfangs des scheibenförmigen Mittelteils der Elektrodenrolle geleitet und über eine spiegelbildlich gleiche Kühlkanalanordnung in die Elektrodenrollenachse zurück und aus dieser hinaus- und über den Schweißarm auf der entgegengesetzten Längsseite zurückgeleitet wird.

In der Ausgestaltung der Erfindung nach Anspruch 3 besteht die Elektrodenrollenachse aus einem mechanisch sehr widerstands- und tragfähigem Werkstoff, auf dem den Elektrodenrollenrotor tragende Wälzlager angeordnet werden können, so daß sich die Elektrodenrolle spielfrei lagern läßt, was für gute Schweißergebnisse wichtig ist.

In der Ausgestaltung der Erfindung nach Anspruch 4 bilden die Kontaktstücke Drehpunkte, um die sich die Kontaktbacken bei Abnützung der relativdrehbeweglichen Kontaktflächen zumindest parallel zur Elektrodenrollenachse drehen können. Die Kontaktstücke können sich in allen Richtungen auf den ebenfalls intensiv und komplementär zu den Kontaktflächen ausgebildeten Stromzuführungsflächen frei bewegen und anpassen.

In der Ausgestaltung der Erfindung nach Anspruch 5 können sich die Kontaktbacken zusätzlich auch noch um ihre Längsachse drehen, falls keine genaue Parallelität zwischen der Achse der Elektrodenrolle und den Stromzuführungsflächen vorhanden sein sollte oder diese Parallelität im Laufe der Zeit verloren gehen sollte.

Sämtliche stromübertragenden Teile der Vorrichtung bestehen zwar aus elektrisch gut leitendem Metall, wie beispielsweise Elektrodenkupfer, durch die Beschichtung der Kontaktstücke und sämtlicher Kontakt- und Stromübertragungsflächen mit Edelmetall gemäß der Ausgestaltung der Erfindung nach Anspruch 6 läßt sich jedoch der Übergangskontakt erheblich verbessern.

In der Ausgestaltung der Erfindung nach Anspruch 7 wird ein bezüglich des Reibungswiderstands und des Kontaktdrucks an den relativdrehbeweglichen Kontaktflächen optimales Verhältnis erzielt.

In der Ausgestaltung nach Anspruch 8 kann weder Schmiermittel noch Schmutz auf das Schweißgut gelangen.

Die Ausgestaltung der Erfindung nach Anspruch 9 betrifft eine Vorrichtung zum elektrischen Widerstands-Rollennahtschweißen von metallbeschichteten Feinstblechen, wie sie insbesondere in der Konservenindustrie Anwendung findet. Bei dieser Vorrichtung dient die Elektrodenrolle als Anpreßteil, welches den in einer Drahtnut am Außenumfang der Elektrodenrolle geführten Kupferdraht gegen das Schweißgut preßt. Der Kupferdraht wird verwendet, weil beim Widerstandsschweißen von mit Zinn, Zink, Blei usw. überzogenen Eisenblechen das Kupfer der Elektrodenrolle mit dem Überzugswerkstoff des Schweißgutes Legierungen bilden und dadurch kontaminiert würde. Durch diese Legierungsbildung würden die Kennwerte der Elektrodenrolle verändert und dadurch die Schweißgefügebildung beeinträchtigt. Da bei der Vorrichtung nur der Kupferdraht mit dem Schweißgut in Berührung kommt, wird nur der Kupferdraht, nicht aber die Elektrodenrolle kontaminiert. Der Kupferdraht wird ständig ersetzt. In der Ausgestaltung der Erfindung nach Anspruch 9 wird der Kupferdraht über die Umlenkrolle geführt, die einen etwas kleineren Durchmesser als die Elektrodenrolle hat. Die Elektrodenrolle übt den eigentlichen Schweißdruck aus, und zwar in Zusammenwirkung mit einer äußeren Schweißrolle, die von außen gegen das Schweißgut drückt. Wegen des hier vorgesehenen Verwendungszwecks hat die Elektrodenrolle einen Außendurchmesser von z. B. etwa 48 mm, während die äußere Schweißrolle einen Durchmesser von beispielsweise 85 mm hat. Da das Verhältnis zwischen den Durchmessern der Elektrodenrolle und der äußeren Schweißrolle 1 : 1 betragen sollte, wird in dieser Ausgestaltung der Erfindung dadurch, daß der Kupferdraht auf einer gewissen Strecke an dem Schweißgut entlanggezogen wird, bevor er über die Umlenkrolle etwas kleineren Durchmessers gezogen wird, ein größerer Durchmesser der Elektrodenrolle simuliert. Wenn das nicht erforderlich ist, könnte der Kupferdraht selbstverständlich auch nur über die Elektrodenrolle geführt werden. Es wäre in diesem Falle lediglich erforderlich, der Elektrodenrolle eine kleine Umlenkrolle vorzuschalten, die zweckmäßig im Bereich der Filz-Schmiersegmente zwischen den Gabelschenkeln des Schweißarms angeordnet würde.

In der Ausgestaltung der Erfindung nach Anspruch 10 ist ein weiterer Kühlmittelkreislauf vorgesehen, der durch die Umlenkrollenachse, die Längsschenkel des Klemmstückes und den Quersteg des Klemmstückes führt und für eine wirksame Innenkühlung der Umlenkrolle sorgt.

Die Elektrodenrolle nach Anspruch 11 ist zwar insbesondere für eine Vorrichtung nach einem der Ansprüche 1 bis 10 vorgesehen, d. h. für eine Vorrichtung, mit welcher sich enge Dosenkörper mit beispielsweise 52 mm Innendurchmesser aus gerundeten Zargen durch Verschweißen der Zargenränder unter Beibehaltung einer guten Schmierung aller relativdrehbeweglichen Kontaktflächen, einer wirksamen Kühlung der Elektrodenrolle und einer verlustarmen Schweißstromzuführung zu der Elektrodenrolle und unter Vermeidung von flüssigem Metall zur Stromübertragung innerhalb der Elektrodenrolle herstellen lassen, sie eignet sich jedoch weiter für jede Vorrichtung zum elektrischen Widerstands-Rollennahtschweißen ungeachtet der umfangsmäßigen Baugröße derselben, da die elektrische Kontaktflächen bildenden Mantelflächen der beiderseits des Mittelteils der Elektrodenrolle vorgesehenen breiten zylindrischen Naben die Schweißstromzuführung zu der Elektrodenrolle mittels Gleitkontakten ermöglichen und da das bis in unmittelbare Nähe des Außenumfangs des Mittelteils der Elektrodenrolle geführte Kühlmittel eine intensive Kühlung der Elektrodenrolle gestattet. Die Elektrodenrolle nach Anspruch 11 kann daher bei allen Vorrichtungen zum elektrischen Widerstands-Rollennahtschweißen benutzt werden, bei denen es auf eine verlustarme Schweißstromzuführung zu der Elektrodenrolle ankommt, flüssiges Metall zur Stromübertragung vermieden werden soll und eine intensive Kühlung der Elektrodenrolle erforderlich ist.

Die Schweißstromzuführung nach Anspruch 12 zu einer Elektrodenrolle ist zwar ebenfalls insbesondere für eine Vorrichtung nach einem der Ansprüche 1 bis 10 bestimmt, sie kann jedoch bei allen Vorrichtungen dieser Art verwendet werden, bei denen es darauf ankommt, einer an dem Schweißarm mittig angeordneten Elektrodenrolle, bei der die Verwendung von flüssigem Metall zur Stromübertragung vermieden werden soll, möglichst verlustarm den Schweißstrom zuzuführen. Es ist nämlich lediglich erforderlich, die Elektrodenrolle mit zwei breiten zylindrischen Naben beiderseits des scheibenförmigen Mittelteils zu versehen und die Nabenmantelflächen mit den gekrümmten Kontaktflächen an den gabelförmigen Enden der Kontaktbacken in Berührung zu bringen und außerdem die kontaktbacken an ihren entgegengesetzten Enden über die in ihnen drehbar gelagerten Kontaktstücke an die Stromzuführungsflächen anzupressen.

In der Ausgestaltung der Erfindung nach den Ansprüchen 13 und 14 ergibt sich der bereits weiter oben dargelegte Vorteil bei etwaiger Nichtparallelität zwischen der Elektrodenrollenachse und den Stromzuführungsflächen.

Ein Ausführungsbeispiel der Erfindung wird im folgenden unter Bezugnahme auf die Zeichnungen näher beschrieben. Es zeigt

Fig. 1 eine Längsschnittansicht des unteren Schweißarms einer elektrischen Widerstands-Rollennahtschweißmaschine mit der Vorrichtung nach der Erfindung,

Fig. 2 die Vorrichtung nach Fig. 1 in Draufsicht,

Fig. 3 eine Querschnittansicht nach der Linie III-III in Fig. 1,

Fig. 4 in gleicher Ansicht wie in Fig. 3 den inneren Aufbau einer Rollenelektrode,

Fig. 5 eine Querschnittansicht nach der Linie V-V in Fig. 1,

Fig. 6 eine Querschnittansicht nach der Linie VI-VI in Fig. 1,

Fig. 7 den inneren Aufbau einer auf die Elektrodenrollenachse aufgesetzten Kappe und

Fig. 8 in Seiten- und in Endansicht eine weitere Ausführungsform eines Kontaktstückes.

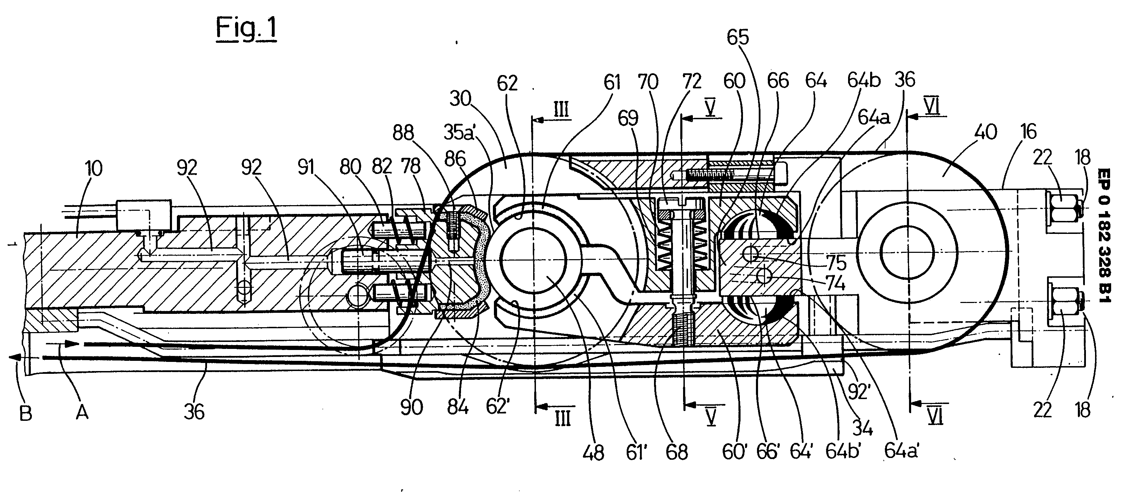

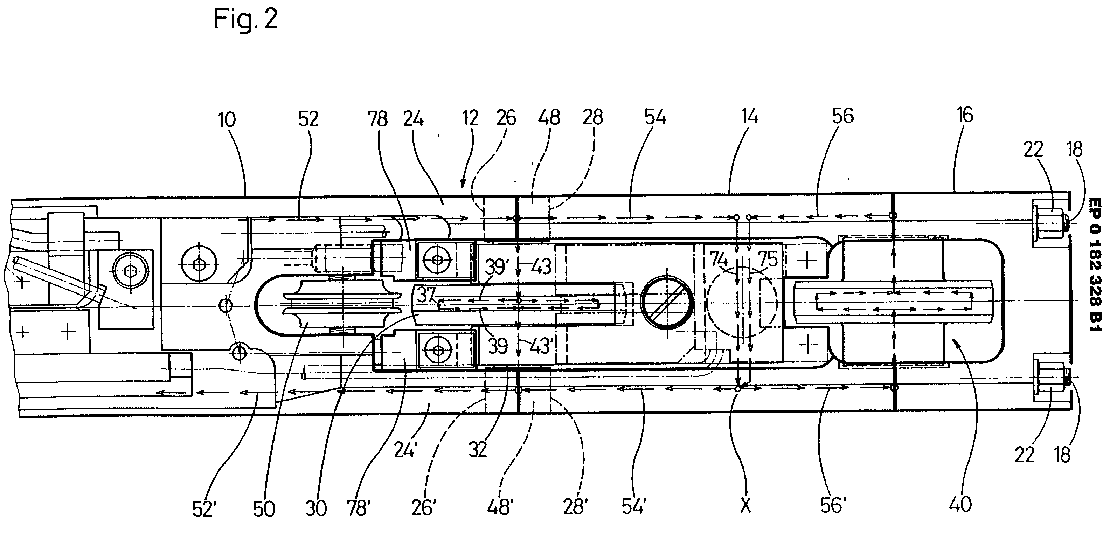

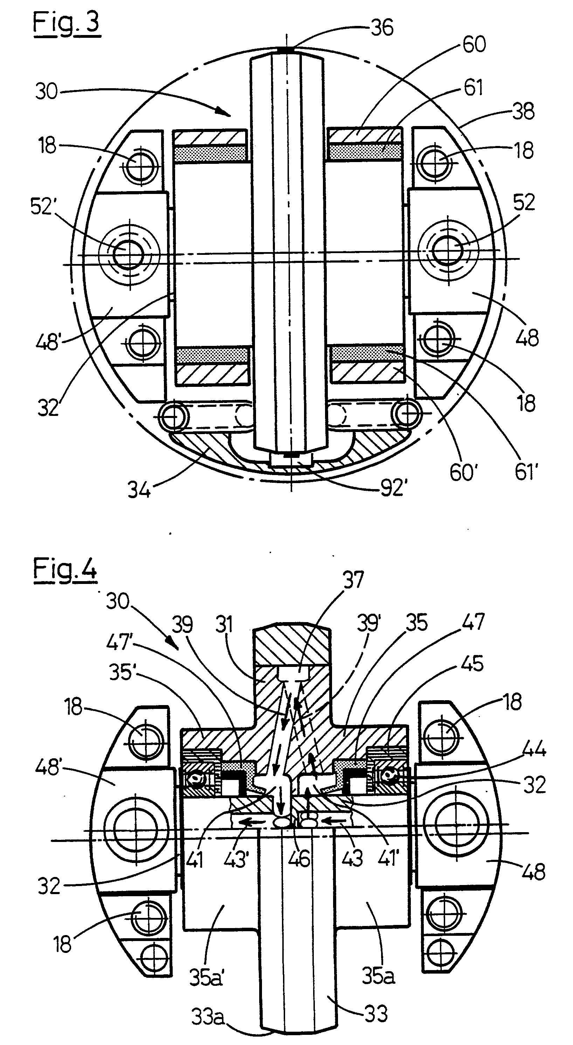

Die Fig. 1 bis 8 zeigen eine Vorrichtung zum elektrischen Widerstands-Rollennahtschweißen. In Fig. 1 erstreckt sich ein Schweißarm 10, der am Ständer einer nicht dargestellten elektrischen Widerstands-Rollennahtschweißmaschine befestigt ist, von der Maschine aus nach rechts. Das freie Ende 12 des Schweißarms 10 erstreckt sich bis in die Ebene des in Fig. 3 dargestellten Schnittes III-III. An das freie Ende 12 des Schweißarms 10 schließt sich in Fig. 1 rechts ein Klemmstück 14 an, das bis zu der Ebene reicht, in der der Schnitt VI-VI geführt ist. An das Klemmstück 14 schließt sich schließlich ein Kopfstück 16 an. In das freie Ende 12 des Schweißarms 10 sind vier lange Gewindebolzen 18 eingeschraubt. Das Klemmstück 14 und das Kopfstück 16 sind jeweils mit Durchgangsbohrungen 20 versehen, die die Gewindebolzen 18 aufnehmen. Das Klemmstück 14 und das Kopfstück 16 sind in den Fig. 1 und 2 von rechts nach links auf die Gewindebolzen 18 aufgeschoben und durch Anziehen von Muttern 22 auf Gewindeenden der Durchgangsbolzen festgespannt worden. Der Schweißarm 10, das Klemmstück 14 und das Kopfstück 16 führen im Betrieb der Schweißmaschine den Schweißstrom und bestehen deshalb aus elektrisch gut leitendem Werkstoff, vorzugsweise aus Kupfer.

Der Schweißarm 10 ist an seinem freien Ende 12 gabelförmig ausgebildet und weist daher zwei Gabelschenkel 24, 24' auf. (Gleiche, aber mit einem hochgesetzten Strich versehene Bezugszahlen bezeichnen jeweils das andere Teil eines Paares von gleich ausgebildeten Teilen.) In den Enden der Gabelschenkel 24, 24' sind Lagermulden 26, 26' vorgesehen, die gemeinsam mit in den benachbarten Enden des Klemmstückes 14 gebildeten Lagermulden 28, 28' die Achse 32 einer Elektrodenrolle 30 aufnehmen, um die Achse 32 an dem Schweißarm 10 festzuklemmen. Die einander benachbarten Enden des Kopfstücks 16 und des Klemmstücks 14 haben die gleiche Ausbildung wie die einander benachbarten Enden des Schweißarms und des Klemmstücks 14, und zwischen ihnen sind die Enden der Achse 42 einer Umlenkrolle 40 eingespannt. Zwischen den Gabelschenkeln 24, 24' ist eine kleinere Umlenkrolle 50 drehbar befestigt. An der Unterseite des Klemmstücks 14 und des freien Endes 12 des Schweißarms 10 ist ein Deckel 34 befestigt, dessen Zweck weiter unten noch näher erläutert ist. Ein im Querschnitt rechteckiger Kupferdraht 36 wird in Fig. 1 links zugeführt (Pfeil A), bewegt sich unten um die Umlenkrolle 50 und nach oben über die Elektrodenrolle 30 und von dieser aus um die Umlenkrolle 40 und wieder aus der Vorrichtung hinaus (Pfeil B). Der Kupferdraht 36 wird im Bereich des oberen Scheitels der Elektrodenrolle 30 gegen das Schweißgut 38 gepreßt (vgl. Fig. 3), bei welchem es sich in dem hier beschriebenen Ausführungsbeispiel um gerundete Zargen handelt, aus denen durch Verschweißen der Zargenränder enge Dosenkörper mit einem Innendurchmesser von beispielshalber 52 mm hergestellt werden. Die gerundeten Zargen 38 werden in Fig. 1 von links nach rechts zugeführt, was nicht näher beschrieben wird, da es nicht Teil der Erfindung ist.

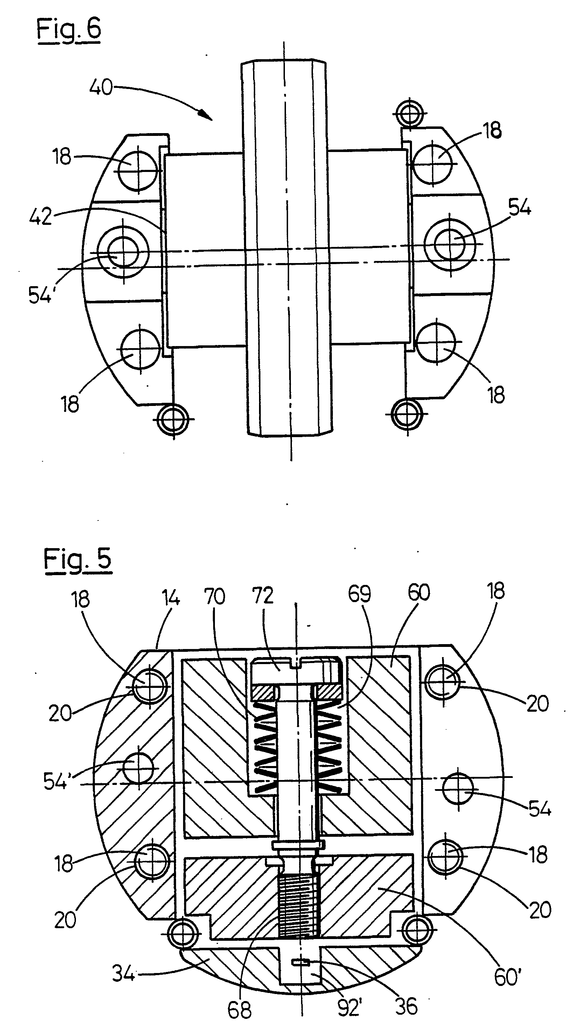

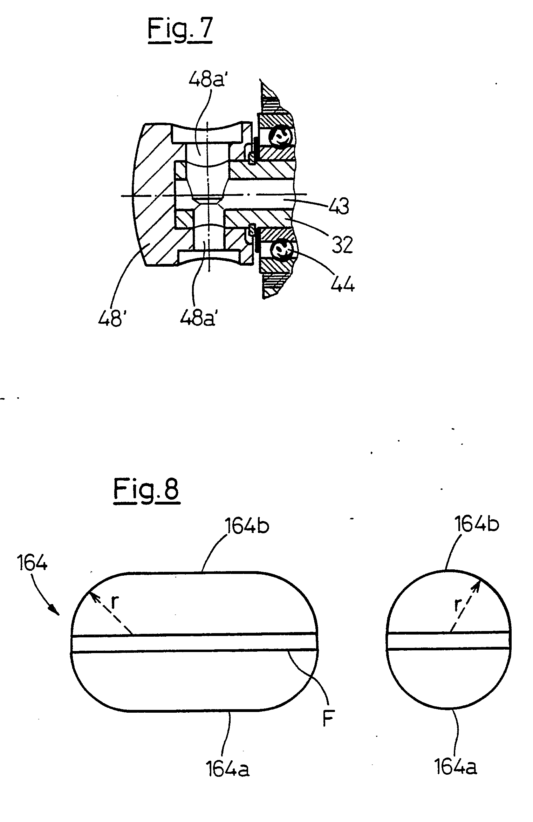

Fig. 4 zeigt den Aufbau der Elektrodenrolle 30. Auf der Achse 32 der Elektrodenrolle 30 ist ein Rotor 31 mittels Wälzlagern 44 drehbar befestigt. Zwischen dem Rotor 31 und den Wälzlagern 44 sind Isolierstoffbüchsen 45 angeordnet, die den Rotor 31 von der Achse 32 elektrisch trennen. Der Rotor 31 hat einen schmalen scheibenförmigen Mittelteil 33 und zwei breite zylindrische Naben 35, 35', deren Mantelflächen 35a, 35a' zwei umlaufende ringförmige Kontaktflächen nach Art von Schleifringen bilden und zur Stromübertragung auf die Elektrodenrolle 30 dienen, was weiter unten noch näher beschrieben ist. Der Mittelteil 33 des Rotors 31 enthält unmittelbar unterhalb seiner äußeren Mantelfläche 33a einen ringförmigen Kühlkanal 37, der über etwa radiale Kühlkanäle 39, 39' und zwei Ringkammern 41, 41' mit zwei axialen Kühlkanälen 43, 43' innerhalb der Elektrodenrollenachse 32 in Verbindung steht. Die Ringkammern 41, 41' sind wälzlagerseitig durch Dichtungen 47 bzw. 47' begrenzt. Die beiden Kühlkanäle 43, 43' sind durch eine mittige Wand 46 voneinander getrennt. Der Fluß des Kühlmittels (z. B. Wasser) ist in den Fig. 2 und 4 durch Pfeile angedeutet und wird weiter unten noch näher beschrieben. Auf jedes Ende der Achse 32 der Elektrodenrolle 30 ist eine elektrisch gut leitende (z. B. aus Kupfer bestehende) Kappe 48 bzw. 48' aufgesetzt, die zwischen den · einander benachbarten Lagermulden 26, 28 bzw. 26', 28' zur Schweißstromübertragung von dem Schweißarm 10 auf das Klemmstück 14 festgeklemmt ist. Die Enden der Achse 42 der Umlenkrolle 40 tragen entsprechende Kappen, die zwischen den entsprechenden Lagermulden des Klemmstücks und des Kopfstücks festgeklemmt sind. Die Achsen 32 und 42 bestehen jeweils aus rostfreiem, antimagnetischem Stahl. Die Umlenkrolle 40 hat außer einem kleineren Durchmesser den gleichen Aufbau wie die Elektrodenrolle 30, allerdings wird auf die Umlenkrolle kein Schweißstrom übertragen, sie wird aber trotzdem ebenfalls intensiv gekühlt, um die ihr über das Klemmstück 14 und den Kupferdraht 36 zugeführte Wärme abzuführen. Die Kappen 48, 48' der Elektrodenrolle 30 sind mit Bohrungen 48a' versehen (vgl. Fig. 7), die eine Verbindung zwischen den Kühlkanälen 43, 43' und Kühlkanälen 52 bzw. 52' herstellen, die in den Gabelschenkeln 24, 24' des Schweißarms 10 vorgesehen sind, in dessen Lagermulden 26, 26' münden und mit Kühlkanälen 54, 54' in Verbindung stehen, die in dem Klemmstück 14 vorgesehen sind (vgl. Fig. 2 und 5).

Zur Schweißstromzuführung zu der Elektrodenrolle 30 sind zwei Kontaktbacken 60, 60' vorgesehen. Die Kontaktbacken 60, 60' sind an ihrem dem Schweißarm 10 benachbarten Ende jeweils gabelförmig ausgebildet und umfassen mit ihren Gabelschenkeln die Elektrodenrolle 30. Die Gabelschenkel der Kontaktbacken 60, 60' sind an ihren den Naben 35, 35' zugewandten Seiten mit gekrümmten Kontaktflächen 62, 62' versehen, mit denen sie jeweils oben und unten auf den Mantelflächen 35a, 35a' der Naben aufliegen. Die Kontaktbacken bestehen aus elektrisch gut leitendem Werkstoff (z. B. Kupfer), und ihre gekrümmten Kontaktflächen 62, 62' sind mit Edelmetall (z. B. Silber) belegt oder an Silberkontaktsegmenten 61, 61' vorgesehen, um einen guten elektrischen Kontakt zwischen den Kontaktbacken und dem Rotor 31 der Elektrodenrolle 30 über deren Naben 35, 35' herzustellen. An den entgegengesetzten Enden der Kontaktbacken 60, 60' sind zwei Kontaktstücke 64 bzw. 64' angeordnet, die aus dem gleichen Werkstoff wie die Kontaktbacken bestehen und ebenfalls mit Edelmetall beschichtet (z. B. versilbert) sind. Die Kontaktstücke 64, 64' haben auf ihren einander benachbarten Seiten ebene Flächen 64a, 64a', mit denen sie auf Stromzuführungsflächen 66 bzw. 66' eines Quersteges 65 aufliegen, der die Längsschenkel des Klemmstücks 14 miteinander verbindet. Die zu den ebenen Flächen 64a, 64a' entgegengesetzten Flächen 64b, 64b' sind als Kugelkalotten ausgebildet. Die Kontaktstücke 64, 64' fassen mit den flächen 64b, 64b' in komplementär ausgebildete Lagerpfannen in den Kontaktbacken ein. Die kugelkalottenförmigen Flächen 64b, 64b' bilden somit Drehlagerflächen, auf denen die Kontaktbacken allseits drehbeweglich gelagert sind. Statt der vorstehend beschriebenen Kontaktstücke 64, 64' können auch walzenförmige Kontaktstücke verwendet werden, die dann statt der kugelkalottenförmigen Flächen zylindrische Flächen haben und größere Stromübergangsflächen ergeben, was weiter unten mit Bezug auf Fig. 8 noch näher beschrieben ist. In letzterem Fall sind die Kontaktbacken 60, 60' nur um zu der Elektrodenrollenache 32 parallele Achsen drehbeweglich, so daß sie eine etwaige Nichtparallelität zwischen diesen Achsen nicht ausgleichen könnten. Der in Fig. 1 unten dargestellte Kontaktbacken 60' hat eine Gewindebohrung 68. Der obere Kontaktbacken 60 hat eine abgesetzte Bohrung 69, in deren breiteren Teil eine Feder 70 eingesetzt ist. Eine Schraube 70 erstreckt sich durch die Feder 70 und mit Spiel durch den schmaleren Teil der abgesetzten Bohrung 69 und ist in die Gewindebohrung 68 eingeschraubt, wie es in Fig. 1 dargestellt ist. Durch mehr oder weniger starkes Anziehen der Schraube 70 läßt sich der Kontaktdruck einstellen, mit welchem die Kontaktbacken 60, 60' auf die Naben 35, 35' und auf die Kontaktstücke 64, 64' drücken. Der Kontaktdruck wird in dem hier beschriebenen Beispiel so eingestellt, daß er an den Kontaktstücken 64, 64' das Ein- bis Zweifache des Kontaktdruckes an den Nabenmantelflächen 35a, 35a' beträgt. Die Kontaktstücke 64, 64' sind mit ihren ebenen Flächen 64a, 64a' auf den Stromzuführungsflächen 66, 66' frei beweglich, so daß sie sich selbsttätig in ihrer Lage so anpassen können, daß stets ein guter Kontakt zwischen den Kontaktbacken 60, 60' und den Nabenmantelflächen 35a, 35a' vorhanden ist. In dem Quersteg 65 sind zwei Kühlkanäle 74, 75 vorgesehen, die mit den Kühlkanälen 54, 54' bzw.

56, 56' in den Längsschenkeln des Klemmstücks 14 und außerdem miteinander in einem der Längsschenkel des Klemmstücks 14 an einer Stelle X (vgl. Fig. 2) in Verbindung stehen.

Die hier beschriebene Vorrichtung ist mit einer Schmiereinrichtung versehen, die in den Fig. 1 und 2 zu erkennen ist. Zwischen den Gabelschenkeln 24, 24' sind zwei Filz-Schmiersegmente 78, 78' vorgesehen. Die Schmiersegmente 78, 78' sind jeweils auf zwei an dem Schweißarm 10 befestigten Stiften 80 in Längsrichtung des Schweißarms verschiebbar und werden durch Federn 82, die zwischen dem Schweißarm und jedem Schmiersegment angeordnet sind, mit ihrem Filzbelag 84 gegen die Nabenmantelflächen 35a bzw. 35a' gedrückt. Der Filzbelag 84 ist an dem Schmiersegment 78 mittels Druckplatten 86 und Schrauben 88 befestigt. Jedes Schmiersegment 78 enthält eine Bohrung 90, die mit einer in dem Schweißarm 10 vorgesehenen Bohrung 92 über ein im Schweißarm verschiebbares Röhrchen 91 in Verbindung steht. Der Bohrung 92 wird Kontaktöl über eine nicht dargestellte Pumpe zugeführt. Die Pumpe wird periodisch betätigt (beispielsweise alle 30 oder 45 Minuten), um einen Schmierimpuls zu erzeugen, durch den der Filzbelag 84 wieder mit Kontaktöl getränkt wird.

Die beschriebene Vorrichtung hat einen sehr servicefreundlichen Aufbau. Es brauchen nämlich lediglich die Muttern 22, die Schraube 72 und der Deckel 34 gelöst zu werden, wenn die Elektrodenrolle 30 oder die Schmiersegmente 78, 78' ausgetauscht werden sollen. Es lassen sich dann der Reihe nach das Kopfstück 16 und die Umlenkrolle 40 wegnehmen, dann kann das Klemmstück 14 abgezogen und die Elektrodenrolle 30 entnommen werden. Wenn diese entnommen ist, lassen sich auch die Schmiersegmente 78, 78' auf einfache Weise auswechseln, da lediglich die Stifte 80 und das Röhrchen 91 aus den zugeordneten Bohrungen herausgezogen zu werden brauchen. Vor dem Lösen der Muttern 22 wird selbstverständlich der Kupferdraht 36 entfernt.

Die Schweißstromzuführung zu der Elektrodenrolle 30 erfolgt bei der beschriebenen Vorrichtung vom Schweißarm 10 aus über die Kappen 48, 48' zu dem Klemmstück 14, von dessen Quersteg 65 aus über die beidseitigen Kontaktstücke 64, 64' zu den Kontaktbacken 60, 60' und von diesen aus zu den die eigentlichen Kontaktflächen der umlaufenden Elektrodenrolle bildenden Nabenmantelflächen 35a, 35a'. Über den Schweißdraht 36 und das Schweißgut 38 fließt dann der Schweißstrom weiter zu einer in den Zeichnungen nicht dargestellten Gegenrolle, die an dem oberen Arm der Widerstandsschweißmaschine angebracht ist. Da die Kontaktbacken die Elektrodenrolle beidseitig unten und oben umgreifen, ergeben sich eine große Stromübertragungsfläche und ein kleiner spezifischer Kontaktdruck. Die sich über eine Bogenlänge von etwa 90° erstreckenden gekrümmten Kontaktflächen 62, 62' der Kontaktbacken 60, 60' ergeben in Verbindung mit einem entsprechend gewählten Durchmesserverhältnis an der Elektrodenrolle und den gekrümmten Kontaktflächen 62, 62' einen kleinen Reibungswiderstand. Die relativdrehbeweglichen Mantelflächen 35a, 35a' und die gekrümmten Kontaktflächen 62, 62' werden über die Filz-Schmiersegmente 78 automatisch dauergeschmiert, wodurch der mechanische Verschleiß zwischen den Kontaktflächen auf ein Minimum beschränkt wird.

In Fig. 2 ist durch Pfeile der Fluß des Kühlmittels dargestellt, wobei zur Verdeutlichung die einzelnen Zweige des Kühlmittelflusses mit den Bezugszahlen der dafür vorgesehenen Kühlkanäle bezeichnet sind. Das Kühlmittel wird in Fig. 2 oben links über den Kühlkanal 52 in dem Schweißarm 10 zugeführt. Dieser steht über die in der Kappe 48 vorgesehenen Bohrungen mit dem Kühlkanal 43 in der Elektrodenrollenachse 32 und mit dem Kühlkanal 54 in dem Klemmstück 14 in Verbindung. Das Kühlmittel fließt aus dem Kühlkanal 43 (über die Ringkammer 41') in die etwa radialen Kühlkanäle 39', von diesen aus in den Ringkanal 37, dann über die etwa radialen Kühlkanäle 39 (und die Ringkammer 41) zurück in den Kühlkanal 43' und durch die Kappe 48' zurück in den Kühlkanal 52' in dem Schweißarm 10. Aus dem Kühlkanal 54 strömt das Kühlmittel durch den Kühlkanal 74 in dem Quersteg 65 und durch den Kühlkanal 54' und die Kappe 48' ebenfalls in den Kühlkanal 52'. An der Stelle X gelangt das Kühlmittel in einen Kühlkanal 56', durchfließt die Achse 42 der Umlenkrolle 40 und die Umlenkrolle selbst auf gleiche Weise wie die Achse 32 der Elektrodenrolle und die Elektrodenrolle 30 selbst und kehrt über einen Kühlkanal 56 und den Kühlkanal 75 in dem Quersteg 65 zu der Stelle X zurück, von wo aus es in den Kühlkanal 54' gelangt. Das beschriebene Kühlsystem gewährleistet eine intensive Kühlung der Elektrodenrolle 30, der Stromzuführungsflächen 66, 66' und auch der Umlenkrolle 40.

Der Deckel 34 ist als Auffangschale ausgebildet, um Kontaktölspritzer, durch Abrieb entstehenden Schmutz und dgl. aufzufangen. Das ist wichtig, wenn die beschriebene Vorrichtung in der Konservenindustrie zum Herstellen von Lebensmitteldosen benutzt wird. Der Deckel 34 enthält eine Nut 92', in die der Kupferdraht 36 in Fig. 1 rechts eintritt und aus der der Kupferdraht 36 in Fig. 1 links austritt. Die Vorrichtung ist dadurch an der Unterseite verschlossen. Der Deckel 34 hat an seiner Außenfläche den gleichen Krümmungsradius wie die gekrümmten Außenflächen des Schweißarms 10, des Klemmstücks 14 und des Kopfstücks 16. Wen die hier beschriebene Vorrichtung zum Schweißen von Dosenkörpern mit einem Innendurchmesser von 52 mm benutzt wird, hat sie einen Außendurchmesser von etwa 49 mm, so daß das Schweißgut, d. h. die gerundete Zarge 38, aus der der Dosenkörper hergestellt wird, ohne weiteres über den Schweißarm 10 und über die hier beschriebene Vorrichtung in Fig. 1 von links nach rechts hinweggeführt werden kann. An das Kopfstück 16 können sich in Fig. 1 rechts noch weitere Vorrichtungen anschließen (beispielsweise zum Innenlackieren des Schweißgutes), die hier der Übersichtlichkeit halber weggelassen worden sind.

Die Vorrichtung kann ohne weiteres auch ohne die Umlenkrolle 40 verwendet werden. In diesem Fall wird dann der Kupferdraht 36 lediglich über die Umlenkrolle 50 und um die Elektrodenrolle 30 geführt. Eingangs ist aber bereits erläutert worden, daß beim Schweißen von engen Dosenkörpern (von z. B. 52 mm Innendurchmesser) die Elektrodenrolle 30 einen kleineren Durchmesser als ihre Gegenrolle hat. Da das Durchmesserverhältnis 1 : 1 betragen sollte, wird der Kupferdraht 36 benutzt, um die Schweißzone zu verlängern und dadurch ein näher bei 1 : 1 liegendes Durchmesserverhältnis zu simulieren. Die Länge der Schweißzone läßt sich auf einfache Weise mit Hilfe des Durchmessers der Umlenkrolle 40 festlegen.

Fig. 8 zeigt eine Ausführungsform eines Kontaktstückes 164, dessen Drehlagerfläche 164b nicht kugelkalottenförmig, sondern in zwei Ebenen zylindrisch ist. Der in der Längsansicht und in der Querschnittansicht gezeigte Radius r ist dabei jeweils derselbe, was aber nicht unbedingt erforderlich ist. Bei dem dargestellten Kontaktstück 164 hat die Kontaktfläche 164a, die mit der Stromübertragungsfläche in Berührung bringbar ist, dieselbe Ausbildung wie die Drehlagerfläche 164b. In diesem Fall ist dann die Stromübertragungsfläche dazu komplementär ausgebildet. Die Kontaktfläche 164a könnte stattdessen auch als ebene Fläche ausgebildet sein (in Fig. 8 nicht dargestellt). Diese ebene Kontaktfläche wäre dann die in Fig. 8 mit F bezeichnete Fläche. In diesem Fall wäre die Stromübertragungsfläche selbstverständlich ebenfalls eben ausgebildet. Die in zwei Ebenen zylindrische oder bombierte Ausbildung der Drehlagerflächen und der Kontaktflächen der Kontaktstücke 164 gibt der Drehlagerung der Kontaktbacken im Bereich der Kontaktstücke mehr Freiheitsgrade, so daß sie sich besser selbst einstellen kann, falls geringfügige Verkantungen vorhanden sind.

## Patentansprüche

1. Vorrichtung zum elektrischen Widerstands-Rollennahtschweissen, mit einem an einem Maschinenständer angeordneten Schweißarm (10), mit einer am freien Ende des Schweißarms drehbar befestigten, innengekühlten Elektrodenrolle (30), der der Schweißstrom über zwei Kontaktbacken (60, 60') zuführbar ist, die über gekrümmte Kontaktflächen (61, 61') mit wenigstens einer mit der Elektrodenrolle umlaufenden ringförmigen Kontaktfläche (35a, 35a') in Berührung sind und jeweils ein an einer dem Schweißarm (10) zugeordneten Stromzuführungsfläche anliegende Kontaktstück (64, 64') haben, wobei die gekrümmten Kontaktflächen (61, 61') und die Kontaktstücke (64, 64') durch Federkraft (70) an die ringförmige Kontaktfläche bzw. an die Stromzuführungsfläche anpreßbar sind, mit einer Kühleinrichtung zur Versorgung von Kühlkanälen (39, 39', 41, 41') in der Elektrodenrolle mit Kühlmittel und mit einer Schmiereinrichtung (70, 78') zur Versorgung der ringförmigen und der gekrümmten Kontaktflächen mit Kontaktöl, dadurch gekennzeichnet, daß die Elektrodenrolle (30) eine an dem Schweißarm (10) festklemmbare Achse (32) und einen auf der Achse drehbar gelagerten Rotor (31) mit einem schmalen scheibenförmigen Mittelteil (33) und zwei breiten zylindrischen Naben (35, 35') aufweist, deren Mantelflächen (35a, 35a') zwei umlaufende ringförmige Kontaktflächen bilden, wobei der Mittelteil unmittelbar unterhalb seiner äußeren Mantelfläche (33a) einen ringförmigen Kühlkanal (37) enthält, der über etwa radiale Kühlkanäle (39, 39') mit axialen Kühlkanälen (43, 43') innerhalb der Elektrodenrollenachse (32) in Verbindung steht; daß der als elektrischer Leiter wirkende Schweißarm (10) am freien Ende (12) gabelförmig ausgebildet ist und in den Enden der Gabelschenkel (24, 24') Lagermulden (26, 26') zur Aufnahme der Achse (32) der Elektrodenrolle (30) hat; daß der Schweißarm (10) am freien Ende (12) durch ein mit ihm lösbar verbundenes und als elektrischer Leiter wirkendes Klemmstück (14) überbrückt ist, das zwei weitere Lagermulden (28, 28') zur Aufnahme der Achse der Elektrodenrolle hat; daß auf jedes Ende der Achse der Elektrodenrolle aufgesetzte, elektrisch gut leitende Kappen (48, 48') zwischen benachbarten Lagermulden (26, 28; 26', 28') zur Stromübertragung vom Schweißarm (10) auf das Klemmstück (14) festgeklemmt sind; daß die Kontaktbacken (60, 60') an ihren der Elektrodenrolle benachbarten Enden gabelförmig ausgebildet sind und somit insgesamt vier gekrümmte Kontaktflächen (62, 62') zur Berührung mit den Nabenmantelflächen (35a, 35a') haben; daß die Kontaktstücke (64, 64') in an sich bekannter Weise in den Kontaktbacken (60, 60') drehbar gelagert sind und mit ebenen oder bombierten Kontaktflächen (64a, 64a'; 164a) an den komplementär ausgebildeten Stromzuführungsflächen (66, 66') anliegen; daß das Klemmstück (14) einen Quersteg (65) aufweist, der mit den Stromzuführungsflächen (66, 66') versehen ist; daß in dem Schweißarm (10) in dessen Lagermulden (26, 26') mündende Kühlkanäle (52, 52') vorgesehen sind, die über Bohrungen (48a') in den Kappen sowohl mit den axialen Kühlkanälen (43, 43') innerhalb der Elektrodenrollenachse (32) als auch mit in dem Klemmstück (14) vorgesehenen und durch den Quersteg (65) führenden weiteren Kühlkanälen (54, 54', 74, 75) in Verbindung stehen; und daß zwischen den Gabelschenkeln (24, 24') des Schweißarms (10) wenigstens ein federnd gegen die Nabenmantelflächen (35a, 35a') gedrücktes und periodisch mit Kontaktöl versorgtes Filz-Schmiersegment (78, 78') als Schmiereinrichtung vorgesehen ist.

2. Vorrichtung nach Anspruch 1, dadurch gekennzeichnet, daß innerhalb der Elektrodenrollenachse (32) zwei durch eine mittige Wand (46) getrennte axiale Kühlkanäle (43, 43') vorgesehen sind, die über zwei benachbarte Ringkammern (41, 41') innerhalb des Rotors (31) und jeweils mehrere der etwa radialen Kühlkanäle (39, 39') mit dem ringförmigen Kühlkanal (37) in Verbindung stehen.

3. Vorrichtung nach Anspruch 1 oder 2, dadurch gekennzeichnet, daß die Elektrodenrollenachse (32) aus rostfreiem, antimagnetischem Stahl und der Rotor (31) aus Elektrodenkupfer besteht.

4. Vorrichtung nach einem der Ansprüche 1 bis 3, dadurch gekennzeichnet, daß die die Kontaktbacken (60, 60') berührenden Drehlagerflächen (164b) der Kontaktstücke (164) walzenförmig oder in zwei Ebenen zylindrisch sind.

5. Vorrichtung nach einem der Ansprüche 1 bis 3, dadurch gekennzeichnet, daß die die Kontaktbacken (60, 60') berührenden Drehlagerflächen (64b, 64b') der Kontaktstücke (64, 64') kugelkalottenförmig sind.

6. Vorrichtung nach einem der Ansprüche 1 bis 5, dadurch gekennzeichnet, daß die Kontaktstücke (64, 64') und sämtliche Kontakt- und Stromübertragungsflächen mit Edelmetall, insbesondere Silber, beschichtet sind.

7. Vorrichtung nach einem der Ansprüche 1 bis 6, dadurch gekennzeichnet, daß die gekrümmten Kontaktflächen (62, 62') der Kontaktbacken (60, 60') eine Bogenlänge von etwa 90° haben.

8. Vorrichtung nach einem der Ansprüche 1 bis 7, dadurch gekennzeichnet, daß das Klemmstück (14) an der Unterseite durch einen Deckel (34) verschlossen ist.

9. Vorrichtung nach einem der Ansprüche 1 bis 8, mit einem laufend zugeführten, um die Elektrodenrolle (30) und um eine Umlenkrolle herumgelegten und durch die Elektrodenrolle gegen das Schweißgut preßbaren Kupferdraht (36), dadurch gekennzeichnet, daß an dem zu dem freien Ende (12) des Schweißarms (10) entgegengesetzten Ende des Klemmstücks (14) ein Kopfstück (16) lösbar befestigt ist und daß die einander benachbarten Enden des Kopfstücks und des Klemmstücks die gleiche Ausbildung wie die einander benachbarten Enden des Schweißarms (10) und des Klemmstücks (14) haben und zwischen sich die Enden der Achse (42) der Umlenkrolle (40), die bei etwas kleinerem Außendurchmesser den gleichen Aufbau wie die Elektrodenrolle (30) hat und mit den gleichen Kappen versehen ist, einspannen.

10. Vorrichtung nach Anspruch 9, dadurch gekennzeichnet, daß in den Längsschenkeln des Klemmstückes (14) noch weitere Kühlkanäle (56, 56') vorgesehen sind, die mit wenigstens einem der weiteren Kühlkanäle (75) in dem Quersteg (65) des Klemmstücks (14) und mit den axialen Kühlkanälen innerhalb der Umlenkrollenachse (42) einen gesonderten Kühlkreis bilden, der mit den übrigen Kühlkanälen (54, 54') des Klemmstücks in Verbindung steht.

11. Elektrodenrolle (30), insbesondere für eine Vorrichtung nach einem der Ansprüche 1 bis 10, mit einer mit Kühlkanälen versehenen Achse (32) und mit einem darauf drehbar gelagerten Rotor (31) mit einem scheibenförmigen Mittelteil (33), dadurch gekennzeichnet, daß beiderseits des Mittelteils (33) breite zylindrische Naben (35, 35') vorgesehen sind, deren Mantelflächen (35a, 35a') elektrische Kontaktflächen bilden, und daß der Mittelteil unmittelbar benachbart zu seiner äußeren Mantelfläche (33a) einen ringförmigen Kühlkanal (37) enthält, der über etwa radiale Kühlkanäle (39, 39') mit den Kühlkanälen (43, 43') in der Elektrodenrollenachse (32) in Verbindung steht.

12. Schweißstromzuführung zu einer Elektrodenrolle, insbesondere für eine Vorrichtung nach einem der Ansprüche 1 bis 10, mit zwei Kontaktbacken (60, 60'), die jeweils über gekrümmte Kontaktflächen (61, 61') mit wenigstens einer mit der Elektrodenrolle umlaufenden ringförmigen Kontaktfläche (35a, 35a') in Berührung sind und jeweils ein Kontaktstück (64, 64') haben, das in der Kontaktbacke drehbar gelagert ist und mit einer Kontaktfläche an einer Stromzuführungsfläche anliegt, wobei durch Federkraft (70) die gekrümmten Kontaktflächen (61, 61') an die ringförmige Kontaktfläche (35a, 35a') und die Kontaktstücke (64, 64') an die Stromzuführungsfläche anpreßbar sind, dadurch gekennzeichnet, daß die Elektrodenrolle (30) eine festklemmbare Achse (32) und einen auf der Achse drehbar gelagerten Rotor (31) aufweist, der zwei breite zylindrische Naben (35, 35') hat, deren Mantelflächen (35a, 35a') zwei umlaufende ringförmige Kontaktflächen bilden, und daß die Kontaktbacken (60, 60') an ihren der Elektrodenrolle (30) benachbarten Enden gabelförmig ausgebildet sind und somit insgesamt vier gekrümmte Kontaktflächen (62, 62') zur Berührung mit den Nabenmantelflächen (35a, 35a') haben.

13. Stromzuführung nach Anspruch 12, dadurch gekennzeichnet, daß die die Kontaktbacken (60, 60') berührenden Drahlagerflächen (64b, 64b') der Kontaktstücke (64, 64'; 164) kugelkalottenförmig oder in zwei Ebenen zylindrisch sind und daß die ihnen benachbarten Flächen an der Kontaktbacken komplementär dazu kugelkalottenförmig oder in zwei Ebenen zylindrisch sind.

14. Stromzuführung nach Anspruch 12, dadurch gekennzeichnet, daß die Kontaktfläche (164b) jedes Kontaktstückes (164) eben oder bombiert ist und daß die ihr benachbarte Stromzuführungsfläche komplementär dazu eben oder bombiert ist.

## Claims

1. An apparatus for electrical resistance roller seam welding, having a welding arm (10) disposed on a machine upright, having an internally cooled electrode roller (30) which is rotatably secured to the free end of the welding arm and to which the welding current can be supplied through two contact jaws (60, 60') which are in contact, through curved contact surfaces (61, 61'), with at least one annular contact surface (35a, 35a') rotating with the electrode roller and each have a contact member (64, 64') bearing against a current-carrying surface associated with the welding arm (10), the curved contact surfaces (61, 61') and the contact members (64, 64') being able to be pressed against the annular contact surface and against the current-carrying surface respectively by spring force (70), having a cooling device to supply cooling ducts (39, 39', 41, 41') in the electrode roller with coolant and having a lubricating device (78, 78') to supply the annular and the curved contact surfaces with contact oil, characterised in that the electrode roller (30) comprises a spindle (32) which can be clamped onto the welding arm (10) and a rotor (31) which is rotatably mounted on the spindle and which has a narrow disc-shaped centre portion (33) and two broad cylindrical hubs (35, 35') the peripheral surfaces (35a, 35a') of which form two rotating annular contact surfaces, the centre portion containing, immediately below its outer peripheral surface (33a), an annular cooling duct (37) which is in communication, through substantially radial cooling ducts (39, 39') with axial cooling ducts (43, 43') inside the spindle (32) of the electrode roller ; that the welding arm (10) which acts as an electrical conductor, is forked at the free end (12) and has bearing depressions (26, 26') in the ends of the fork arms (24, 24') to receive the spindle (32) of the electrode roller (30) ; that the welding arm (10) is bridged at the free end (12) by a clamping member (14) which is detachably connected thereto and acts as an electrical conductor and which has two further bearing depressions (28, 28') to receive the spindle of the electrode roller ; that caps (48, 48') which are good electrical conductors and are placed on each end of the spindle of the electrode roller are clamped between adjacent bearing depressions (26, 28 ; 26', 28') to transmit current from the welding arm (10) to the clamping member (14) ; that the contact jaws (60, 60') are forked at their ends adjacent to the electrode roller and so have a total of four curved contact surfaces (62, 62') for contact with the hub surfaces (35a, 35a') ; that the contact members (64, 64') are pivotally mounted in the contact jaws (60, 60') in a manner known per se and, bear, with plane or cambered contact surfaces (64a, 64a' ; 164a) against the current-carrying surfaces (66, 66') of complementary construction ; that the clamping member (14) comprises a transverse web (65) which is provided with the current-carrying surfaces (66, 66') ; that cooling ducts (52, 52') are provided in the welding arm (10) and lead into its bearing depressions (26, 26'), which cooling ducts are in communication, through bores (48a') in the caps, both with the axial cooling ducts (43, 43') inside the spindle (32) of the electrode roller and with further cooling ducts (54, 54' ; 74, 75) provided in the clamping member (14) and leading through the transverse web (65) and that at least one felt lubricating segment (78, 78') which is urged resiliently against the hub surfaces (35a, 35a') and is periodically supplied with contact oil is provided as a lubricating device between the fork arms (24, 24') of the welding arm (10).

2. An apparatus as claimed in claim 1, characterised in that two axial cooling ducts (43, 43') which are separated by a central wall (46) are provided inside the spindle (32) of the electrode roller and are in communication with the annular cooling duct (37) through two adjacent annular chambers (41, 41') inside the rotor (31) and a plurality of the substantially radial ducts (39, 39').

3. An apparatus as claimed in claim 1 or 2, characterised in that the spindle (32) of the electrode roller consists of stainless, non-magnetic steel and the rotor (31) consists of electrode copper.

4. An apparatus as claimed in any one of claims 1 to 3, characterised in that the pivot-bearing surfaces (164b) of the contact members (164) which touch the contact jaws (60, 60') are roller shaped or are cylindrical in two planes.

5. An apparatus as claimed in any one of claims 1 to 3, characterised in that the pivot-bearing surfaces (64b, 64b') of the contact members (64, 64') touching the contact jaws (60, 60') have the form of spherical segments.

6. An apparatus as claimed in any one of claims 1 to 5, characterised in that the contact members (64, 64') and all contact surfaces and current-carrying surfaces are coated with precious metal, particularly silver.

7. An apparatus as claimed in any one of claims 1 to 6, characterised in that the curved contact surfaces (62, 62') of the contact jaws (60, 60') have an arc length of about 90°.

8. An apparatus as claimed in any one of claims 1 to 7, characterised in that the clamping member (14) is closed by a cover (34) at the underside.

9. An apparatus as claimed in any one of claims 1 to 8, having a copper wire (36) which is supplied continuously, laid round the electrode roller (30) and round a guide roller and can be pressed by the electrode roller against the work to be welded, characterised in that a head member (16) is detachably secured to the end of the clamping member (14) opposite to the free end (12) of the welding arm (10) and that the adjacent ends of the head member and of the clamping member have the same construction as the adjacent ends of the welding arm (10) and of the clamping member (14) and grip between them the ends of the spindle (42) of the guide roller (40) which has the same construction as the electrode roller (30) with a somewhat smaller external diameter and is provided with the same caps.

10. An apparatus as claimed in claim 9, characterised in that provided in the longitudinal arms of the clamping member (14) are further cooling ducts (56, 56') which, with at least one of the further cooling ducts (75) in the transverse web (65) of the clamping member (14) and with the axial cooling ducts inside the spindle (42) of the guide roller, form a separate cooling circuit which is in communication with the other cooling ducts (54, 54') of the clamping member.

11. An electrode roller (30), particularly for an apparatus as claimed in any one of claims 1 to 10, having a spindle (32) provided with cooling ducts and having a rotor (31) which is rotatably mounted thereon and has a disc-shaped centre portion (33) characterised in that provided at each side of the centre portion (33) are broad cylindrical hubs (35, 35') the peripheral surfaces (35a, 35a') of which form electrical contact surfaces, and that immediately adjacent to its outer peripheral surface (33a), the centre portion contains an annular cooling duct (37) which is in communication with the cooling ducts (43, 43') in the spindle (32) of the electrode roller through substantially radial cooling ducts (39, 39').

12. A welding current supply for an electrode roller, particularly for an apparatus as claimed in any one of claims 1 to 10, having two contact jaws (60, 60') which are each in contact, through curved contact surfaces (61, 61') with at least one annular contact surface (35a, 35a') rotating with the electrode roller and each have a contact member (64, 64') which is pivotally mounted in the contact jaw and bears with a contact surface against a current-carrying surface, the curved contact surfaces (61, 61') being able to be pressed against the annular contact surface (35a, 35a') and the contact members (64, 64') against the current-carrying surface by spring force (70), characterised in that the electrode roller (30) comprises a spindle (32) which can be firmly clamped and a rotor (31) which is rotatably mounted on the spindle and which has two broad cylindrical hubs (35, 35'), the peripheral surfaces (35a, 35a') of which form two rotating annular contact surfaces and that the contact jaws (60, 60') are forked at their ends adjacent to the electrode roller (30) and so have four curved contact surfaces (62, 62') for contact with the hub surfaces (35a, 35a').

13. A current supply as claimed in claim 12, characterised in that the pivot-bearing surfaces (64b, 64b') of the contact members (64, 64' ; 164) which contact the contact jaws (60, 60') have the form of spherical segments or are cylindrical in two planes and that the adjacent surfaces on the contact jaws are complementary thereto being in the form of spherical segments or cylindrical in two planes.

14. A current supply as claimed in claim 12, characterised in that the contact surface (164b) of each contact member (164) is plane or cambered and that the current-carrying surface adjacent thereto is plane or cambered complementarily thereto.

**Revendications**

1. Dispositif pour le soudage électrique par résistance à la molette, comportant un bras de soudage (10) monté sur un bâti de la machine, un galet formant électrode de soudage (30), qui est refroidi intérieurement, et est monté sur l'extrémité libre du bras de soudage et auquel le courant de soudage peut être envoyé par l'intermédiaire de deux mâchoires de contact (60, 60'), qui sont en contact, par l'intermédiaire de surfaces de contact cintrées (61, 61'), avec au moins une surface annulaire de contact (35a, 35a') tournant avec le galet formant électrode et possèdent chacune une pièce de contact (64, 64') s'appliquant contre une surface d'alimentation en courant, associée au bras de soudage (10), les surfaces de contact cintrées (61, 61') et les pièces de contact (64, 64') pouvant être repoussées, sous l'action de la force d'un ressort (70), contre la surface annulaire de contact ou contre la surface d'alimentation en courant, et comportant un dispositif de refroidissement servant à alimenter des canaux de refroidissement (39, 32', 41, 41') situés dans le galet formant électrode, avec un fluide de refroidissement, et un dispositif de lubrification (78, 78') servant à alimenter la surface annulaire de contact et les surfaces cintrées de contact avec une huile de contact, caractérisé en ce que le galet formant électrode (30) possède un axe (32) pouvant être bloqué par serrage sur le bras de soudage (10) et un rotor (31) monté rotatif sur l'axe et comportant une partie médiane en forme de disque étroit (33) et deux moyeux cylindriques larges (35, 35'), dont les surfaces enveloppes (35a, 35a') forment deux surfaces annulaires rotatives de contact, la partie médiane contenant, directement au-dessous de sa surface enveloppe extérieure (33a), un canal annulaire de refroidissement (37), qui est relié, par l'intermédiaire de canaux approximativement radiaux de refroidissement (39, 39'), à des canaux axiaux de refroidissement (43, 43') situés à l'intérieur de l'axe (32) du galet formant électrode ; que le bras de soudage (10), qui agit en tant que conducteur électrique, est réalisé sous la forme d'une fourche au niveau de son extrémité libre (12) et possède, dans les extrémités des branches (24, 24') constituant la fourche, des logements de support en forme d'auges (26, 26') servant à loger l'axe (32) du galet formant électrode (30) ; que le bras de soudage (10) est recouvert, au niveau de son extrémité libre (12), par un élément de serrage (14), qui est relié de façon détachable au bras de soudage, agit en tant que conducteur électrique et possède deux autres logements de support en forme d'auges (28, 28') servant à recevoir l'axe du galet formant électrode ; que des capuchons (48, 48'), qui sont bons conducteurs de l'électricité et sont placés sur chaque extrémité de l'axe du galet formant électrode, sont bloqués par serrage entre des logements voisins de support en forme d'auges (26, 28 ; 26', 28') pour la transmission du courant du bras de soudage (10) à l'élément de serrage (14) ; que les mâchoires de contact (60, 60') sont agencées en forme de fourche au niveau de leurs extrémités voisines du galet formant électrode et possèdent par conséquent au total quatre surfaces cintrées de contact (62, 62') destinées à venir en contact avec les surfaces enveloppes (35a, 35a') des moyeux ; que les éléments de contact (64, 64') sont montés de façon à pouvoir tourner, de façon connue en soi, dans les mâchoires de contact (60, 60') et s'appliquent par des surfaces planes ou bombées de contact (64a, 64a' ; 164a) sur les surfaces d'alimentation en courant (66, 66') agencées avec des formes complémentaires ; que l'élément de serrage (14) possède une barrette transversale (65), qui comporte les surfaces d'alimentation en courant (66, 66') ; qu'il est prévu, dans le bras de soudage (10), des canaux de refroidissement (52, 52'), qui débouchent dans les logements de support en forme d'auges (26, 26') de ce bras et sont reliés par l'intermédiaire de perçages (48') ménagés dans les capuchons, aussi bien aux canaux axiaux de refroidissement (43, 43') situés à l'intérieur de l'axe (32) du galet formant électrode que, également, à d'autres canaux de refroidissement (54, 54', 74, 75) prévus dans l'élément de serrage (14) et traversant la barrette transversale (65) ; et qu'entre les branches (24, 24'), formant la fourche du bras de soudage (10), il est prévu, comme dispositif de lubrification, au moins un segment de lubrification en feutre (78, 78') repoussé élastiquement contre les surfaces centrales (35a, 35a') du moyeu et alimenté périodiquement avec l'huile de contact.

2. Dispositif selon la revendication 1, caractérisé en ce qu'à l'intérieur de l'axe (32) du galet formant électrode il est prévu deux conduits axiaux de refroidissement (43, 43'), qui sont séparés par une paroi médiane (46) et sont reliés au canal annulaire de refroidissement (37) par l'intermédiaire de deux chambres annulaires voisines (41, 41') à l'intérieur du rotor (31) et respectivement de plusieurs des canaux approximativement radiaux de refroidissement (39, 39').

3. Dispositif selon la revendication 1 ou 2, caractérisé en ce que l'axe (32) du galet formant électrode est réalisé en un acier inoxydable antimagnétique et que le rotor (31) est réalisé en cuivre pour électrodes.

4. Dispositif selon l'une des revendications 1 à 3, caractérisé en ce que les surfaces de coussinet (164b), qui contactent les mâchoires de contact (60, 60'), des pièces de contact (164) possèdent une forme cylindrique ou sont cylindriques dans deux plans.

5. Dispositif selon l'une des revendications 1 à 3, caractérisé en ce que les surfaces de coussinet (64b, 64b'), qui sont en contact avec les mâchoires de contact (60, 60') des pièces de contact (64, 64') possèdent la forme de calottes sphériques.

6. Dispositif selon l'une des revendications 1 à 5, caractérisé en ce que les pièces de contact (64, 64') et toutes les surfaces de contact et toutes les surfaces de transmission du courant possèdent un revêtement de métal précieux, notamment d'argent.

7. Dispositif selon l'une des revendications 1 à 6, caractérisé en ce que les surfaces de contact cintrées (62, 62') des mâchoires de contact (60, 60') possèdent une longueur d'arc d'environ 90°.

8. Dispositif selon l'une des revendications 1 à 7, caractérisé en ce que l'élément de serrage (14) est fermé, au niveau de la face inférieure, par un couvercle (34). ·

9. Dispositif selon l'une des revendications 1 à 8, comportant un fil de cuivre (36) amené de façon continue, s'enroulant autour du galet formant électrode (30) et autour d'un galet de renvoi et pouvant être repoussé par le galet formant électrode contre la pièce à souder, caractérisé en ce qu'un élément de tête (16) est fixé de façon amovible sur l'extrémité de l'élément de serrage (14), située à l'opposé de l'extrémité libre (12) du bras de soudage (10), et que les extrémités, voisines l'une de l'autre, de l'élément de tête et de l'élément de serrage possèdent le même agencement que les extrémités, qui sont voisines l'une de l'autre, du bras de soudage (10) et de l'élément de serrage (14) et enserrent entre elles les extrémités de l'axe (42) du galet de renvoi (40), qui, pour un diamètre extérieur légèrement inférieur, possède la même constitution que le galet formant électrode (30) et comporte les mêmes capuchons.

10. Dispositif selon la revendication 9, caractérisé en ce que dans les branches longitudinales de l'élément de serrage (14) il est prévu encore d'autres canaux de refroidissement (56, 56'), qui forment, avec au moins l'un des autres canaux de refroidissement (75) situés dans la branche transversale (65) de l'élément de serrage (14) et avec les canaux axiaux de refroidissement situés à l'intérieur de l'axe (42) du galet de renvoi, un circuit particulier de refroidissement relié aux autres canaux de refroidissement (54, 54') de l'élément de serrage.

11. Galet formant électrode (30), notamment pour un dispositif selon l'une des revendications 1 à 10, comportant un axe (32) et un rotor (31) monté de façon à pouvoir tourner sur cet axe et comportant un élément central en forme de disque (33), caractérisé en ce que des deux côtés de l'élément central (33), il est prévu deux moyeux cylindriques (35, 35'), dont les surfaces enveloppes (35a, 35a') forment des surfaces de contact électriques, et que l'élément central contient, directement au voisinage de sa surface enveloppe extérieure (33a), un canal annulaire de refroidissement (37), qui est relié, par l'intermédiaire de canaux approximativement radiaux de refroidissement (39, 39'), aux canaux de refroidissement (43, 43') situés dans l'axe (32) du galet formant électrode.

12. Dispositif d'alimentation à courant de soudage pour un galet formant électrode, notamment pour un dispositif selon l'une des revendications 1 à 10, comportant deux mâchoires de contact (60, 60'), qui sont en contact, respectivement par l'intermdiaire de surfaces cintrées de contact (61, 61'), avec au moins une surface annulaire de contact (35a, 35a'), qui entourent le galet formant électrode, et possèdent respectivement une pièce de contact (64, 64'), qui est montée de façon à pouvoir tourner dans la mâchoire de contact et s'applique au moyen d'une surface de contact contre une surface d'alimentation en courant, les surfaces de contact cintrées (61, 61') pouvant être repoussées, par la force d'un ressort (70), contre la surface annulaire de contact (35a, 35a'), et les pièces de contact (64, 64') pouvant être repoussées contre la surface d'alimentation en courant, caractérisé en ce que le galet formant électrode (30) possède un axe (32) pouvant être bloqué par serrage et un rotor (31) monté de façon à pouvoir tourner sur l'axe et possédant deux moyeux cylindriques larges (35, 35'), dont les surfaces enveloppes (35a, 35a') forment deux surfaces annulaires rotatives de contact, et que les mâchoires de contact (60, 60') sont réalisées de manière à former une fourche au niveau de leurs extrémités voisines du galet formant électrode (30) et possèdent par conséquent globalement quatre surfaces cintrées de contact (62, 62'), destinées à venir en contact avec les surfaces enveloppes (35a, 35a') des moyeux.

13. Dispositif d'alimentation en courant selon la revendication 12, caractérisé en ce que les surfaces de coussinet (64b, 64b'), qui sont en contact avec les mâchoires de contact (60, 60'), des pièces de contact (64, 64' ; 164) possèdent la forme de calottes sphériques ou sont cylindriques dans deux plans, et que les surfaces, qui leur sont voisines, des mâchoires de contact possèdent la forme de calottes sphériques ou sont cylindriques dans deux plans, d'une manière complémentaire aux surfaces de coussinet.

14. Dispositif d'alimentation en courant selon la revendication 12, caractérisé en ce que la surface de contact (164b) de chaque pièce de contact (164) est plane ou bombée et que la surface d'alimentation en courant, qui en est voisine, est plane ou bombée d'une manière complémentaire à ladite surface de contact.

Fig.1

EP 0 182 328 B1

Fig. 2

Fig. 3

Fig. 4

## Fig. 6

40

18

42

54'

18

18

54

18

## Fig. 5

18    14    70    72    69    60    18

20                                    20

54'                                   54

18                                    18

20                                    20

60'

34

68    92'    36

4

## Fig. 7

48a'

43

32

44

48'      48a'

## Fig. 8

164b          164b

164

r           r

F

164a         164a